# EUROPEAN PATENT APPLICATION

(11) **EP 4 803 416 A1**
(43) Date of publication of application: **09.09.2026**
(21) Application number: 26150652.1
(22) Date of filing: 07.01.2026
(51) Int. Cl.: B64C 11/20, B64C 11/26

(54) **AIRFOIL ASSEMBLY HAVING A COMPOSITE SPAR FOR AN ENGINE**

(30) Priority: 07.03.2025 US 202519073576
(71) Applicant: General Electric Company, Evendale, Ohio 45215 (US)
(72) Inventor: VAN OFLEN, Benjamin Thomas, Evendale, 45215 (US); TREVARTHEN, James, Evendale, 45215 (US)
(74) Representative: Openshaw & Co.

(57) **Abstract**

An airfoil assembly (100) for an engine (10) having an airfoil body (110), a composite spar (120, 220, 320), a sleeve assembly (130, 230, 330), and a set of paddles (150, 250, 350). The composite spar (120, 220, 320) having an interior spar portion (126) located at an interior (114) of the airfoil body (110) and an exterior spar portion (128) exterior of the airfoil body (110). The sleeve assembly (130, 230, 330) comprises an outer sleeve (132, 232, 332) and an inner sleeve (134, 234, 334). The set of paddles (150, 250, 350) can extend from the inner sleeve (134, 234, 334) or the outer sleeve (132, 232, 332) towards the other of the inner sleeve (134, 234, 334) or the outer sleeve (132, 232, 332).

## Description

### TECHNICAL FIELD

The disclosure generally relates to an airfoil assembly, and more specifically to an airfoil assembly having a sleeve assembly and a composite spar.

### BACKGROUND

Turbine engines, and particularly gas or combustion turbine engines, are rotary engines that extract energy from a flow of gases passing through a fan with a plurality of fan blades, then into the engine through a series of compressor stages, which include pairs of rotating blades and stationary vanes, through a combustor, and then through a series of turbine stages, which include pairs of rotating blades and stationary vanes. The blades are mounted to rotating disks, while the vanes are mounted to stator disks.

During operation air is brought into the compressor section through the fan section where it is then pressurized in the compressor and mixed with fuel in the combustor for generating hot combustion gases which flow downstream through the turbine stages where the air is expanded and exhausted out an exhaust section. The expansion of the air in the turbine section is used to drive the rotating sections of the fan section and the compressor section. The drawing in of air, the pressurization of the air, and the expansion of the air is done, in part, through rotation of various rotating blades mounted to respective disks throughout the fan section, the compressor section and the turbine section, respectively. The rotation of the rotating blades imparts mechanical stresses along various portions of the blade; specifically, where the blade is mounted to the disk.

In some engines, a variable pitch airfoil can be included, which can be selectively rotated to adjust or otherwise tailor the flow of fluid over the variable pitch airfoil. The variable pitch airfoil is movable through use of a sleeve and a spar. The sleeve can have a rotation direction about a pitch axis, which in turn rotates the spar and the variable pitch airfoil. The sleeve is coupled to or otherwise formed with the spar.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of an unducted or open rotor turbine engine.
FIG. 2 is a schematic perspective view of an aircraft including the unducted or open rotor turbine engine of FIG. 1.
FIG. 3 is side view of an airfoil assembly of FIG. 2 including a composite spar and a sleeve assembly in accordance with an exemplary embodiment of the present disclosure.
FIG. 4 is a schematic cross-sectional view of the airfoil assembly as seen from sectional line IV-IV of FIG. 3, further illustrating an exemplary configuration of the sleeve and the composite spar in accordance with various aspects described herein.
FIG. 5 is a schematic cross-sectional view of the airfoil assembly as seen from sectional line V-V of FIG. 3, further illustrating an exemplary configuration of the sleeve and the composite spar, in accordance with various aspects described herein.
FIG. 6 is a flowchart illustrating an exemplary method of forming an airfoil assembly of FIG. 3, in accordance with various aspects described herein.
FIG. 7 is a variation of the schematic cross-sectional view of the airfoil assembly of FIG. 4, in accordance with various aspects described herein.
FIG. 8 is a schematic cross-sectional view of the airfoil assembly as seen from sectional line VIII-VIII of FIG. 7, in accordance with various aspects described herein.
FIG. 9 is a variation of the airfoil assembly of FIG. 8, in accordance with various aspects described herein.

### DETAILED DESCRIPTION

Aspects and advantages of the disclosure will be set forth in part in the following description, or may be obvious from the description, or may be learned through practice of the disclosure herein.

Traditionally, airfoils include a metal spar that is formed with or coupled to a metal sleeve.

Aspects of the disclosure herein are directed to an airfoil assembly for an engine. Non-limiting examples of the engine can be an electric engine, a turbine engine, or a hybrid engine. While illustrated as a turbine engine, it will be understood that other engines and propulsors can be utilized. Therefore, for example, aspects of the disclosure herein are directed to an airfoil for a turbine engine having an airfoil body with a composite spar, where a portion of the composite spar is received by a sleeve assembly. The metallic sleeve assembly can include an inner sleeve and an outer sleeve, where the outer sleeve is spaced from and circumscribes the inner sleeve. The composite spar is received at a radial outer surface of the inner sleeve. The composite spar can also be received at a radially inner surface of the outer sleeve. The sleeve assembly can further include a set of paddles extending from the inner sleeve or the outer sleeve towards the other of the inner sleeve or the outer sleeve. The set of paddles are at least partially burrowed or situated within the portion of the composite spar received by the sleeve assembly. The set of paddles transfer torque between the composite spar, the inner sleeve, the outer sleeve, or any combination thereof.

One or more paddles in the set of paddles can be coupled to the outer sleeve, the inner sleeve, or combination thereof. Additionally, or alternatively, one or more paddles in the set of paddles can be unitarily formed with the outer sleeve or the inner sleeve. The set of paddles can be situated within a set of spar recesses. That is, a portion of the composite spar can define a spar recess that receives one or more of the paddles in the set of paddles. The set of spar recesses can be formed during layup of the composite spar or machined in the composite spar after curing or partial curing.

The mechanical interlock between the paddles, the metallic sleeve assembly, and the composite spar provide improved coupling between the composite spar and the metallic sleeve assembly. The set of paddles can also transfer torque (e.g., changing airfoil pitch, changing atmospheric airflow, or impact event) applied to the airfoil body to the inner sleeve, the outer sleeve, or a combination thereof. This can extend the lifetime of the airfoil assembly.

The sleeve assembly can be cast or printed or forged having the set of recesses at the radial surfaces of the inner sleeve, the outer sleeve, or a combination thereof. Alternatively, the set of recesses can be machined into the sleeve assembly.

The set of paddles can be formed with or coupled to the metallic sleeve assembly. The airfoil body and composite spar are formed of composite material. A portion of the composite spar, uncured, can be received by the sleeve assembly having the set of paddles. That is, a portion of the composite spar preform or portions of a multi-piece composite spar can be located in the sleeve assembly prior to completely curing. The uncured composite spar material forms the set of spar recesses that receive the set of paddles. Upon curing, the composite spar shape solidifies. The set of paddles located within the set of spar recesses provides an improved interface between the metallic material of the sleeve assembly and the composite material of the spar.

Alternatively, in different and non-limiting examples, the composite spar can be cured or at least partially cured, such that the set of spar recesses can be machined into the composite spar. As used herein, the term "partially cured" can include curing the object to 40% cured, but less than 100% cured. In yet another different and non-limiting example, the composite spar can be assembled or consolidated into the set of paddles. The set of paddles can then be formed with the sleeve assembly or received by the sleeve recesses and received by the spar recesses to provide an interlock of the metallic material of the sleeve assembly and the composite material of the composite spar.

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The term "composite", as used herein is, is indicative of a material that does not include metal material. A composite can be a combination of at least two or more non-metallic elements or materials. Examples of a composite material can be, but not limited to, a polymer matrix composite (PMC), a ceramic matrix composite (CMC), carbon fiber, polymeric resin, thermoplastic, bismaleimide (BMI), polyimide materials, epoxy resin, glass fiber, and silicon matrix materials.

The term "metallic composite," as used herein is, is indicative of a composite material combined with a metallic or metal material, for example, metal matrix composites (MMC) or carbon fiber infused with metal fibers.

As used herein, a "composite" component refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. Adhesives can include resin and phenolics, wherein the adhesive can require curing at elevated temperatures or other hardening techniques.

As used herein, PMC refers to a class of materials. By way of example, the PMC material is defined in part by a prepreg, which is a reinforcement material preimpregnated with a polymer matrix material, such as thermoplastic resin. Non-limiting examples of processes for producing thermoplastic prepregs include hot melt pre-pregging in which the fiber reinforcement material is drawn through a molten bath of resin and powder pre-pregging in which a resin is deposited onto the fiber reinforcement material, by way of non-limiting example electrostatically, and then adhered to the fiber, by way of non-limiting example, in an oven or with the assistance of heated rollers. The prepregs can be in the form of unidirectional tapes or woven fabrics, which are then stacked on top of one another to create the number of stacked plies desired for the part.

Multiple layers of prepreg are stacked to the proper thickness and orientation for the composite component and then the resin is cured and solidified to render a fiber reinforced composite part. Resins for matrix materials of PMCs can be generally classified as thermosets or thermoplastics. Thermoplastic resins are generally categorized as polymers that can be repeatedly softened and flowed when heated and hardened when sufficiently cooled due to physical rather than chemical changes. Notable example classes of thermoplastic resins include nylons, thermoplastic polyesters, polyaryletherketones, and polycarbonate resins. Specific example of high performance thermoplastic resins that have been contemplated for use in aerospace applications include, polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg, in another non-limiting example, with the use of thermoplastic polymers, it is possible to utilize a woven fabric. Woven fabric can include, but is not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers or matrix material to a mold or cavity. The dry fibers or matrix material can include prepreg, braided material, woven material, or any combination thereof.

Resin can be pumped into or otherwise provided to the mold or cavity to impregnate the dry fibers or matrix material. The combination of the impregnated fibers or matrix material and the resin are then cured and removed from the mold. When removed from the mold, the composite component can require post-curing processing.

It is contemplated that RTM can be a vacuum assisted process. That is, the air from the cavity or mold can be removed and replaced by the resin prior to heating or curing. It is further contemplated that the placement of the dry fibers or matrix material can be manual or automated.

The dry fibers or matrix material can be contoured to shape the composite component or direct the resin. Optionally, additional layers or reinforcing layers of a material differing from the dry fiber or matrix material can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled and/or coated prior to inclusion within the ceramic matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing and subsequent chemical processing to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many engine components used in higher temperature sections of engines, such as airfoils (e.g., turbines, and vanes), combustors, shrouds and other like components, that would benefit from the lighter-weight and higher temperature capability these materials can offer.

As used herein, the terms "additive manufacturing" and "additively manufactured" refer generally to manufacturing processes wherein successive materials or layers of materials are provided on each other to build, i.e., layer-by-layer or piece-by-piece, a three-dimensional component. The successive pieces or layers generally fuse together to form a monolithic component which may have a variety of integral components. The additive manufacturing processes described herein may be used for forming components using any suitable material. For example, the material may be a plastic, metal, ceramic, polymer, epoxy, thermoplastic resin, or any other suitable material that may be in solid, liquid, powder, sheet material, wire, or any other suitable form. More specifically, according to exemplary embodiments of the present disclosure, the additively manufactured components described herein may be formed in part, in whole, or in some combination of materials including but not limited to titanium, iron, aluminum, stainless steel, and nickel alloys.

The terms "metallic" as used herein are indicative of a material that includes metal such as, but not limited to, titanium, iron, aluminum, stainless steel, and nickel alloys. A metallic material or alloy can be a combination of at least two or more elements or materials, where at least one is a metal. The other element or material can be nonmetal.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first" and "second" can be used interchangeably to distinguish one component from another and are not intended to signify location or importance of the individual components.

The terms "forward" and "aft" refer to relative positions within an engine or vehicle, and refer to the normal operational attitude of the engine or vehicle. For example, with regard to a gas turbine engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" can be a gas or a liquid, or multi-phase.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

"Optional" or "optionally" means that the subsequently described event or circumstance may or may not occur, and that the description includes instances where the event occurs and instances where it does not.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

In certain exemplary embodiments of the present disclosure, an unducted or open rotor turbine engine includes a set of circumferentially spaced fan blades, which extend, exteriorly, beyond a nacelle encasing an engine core.

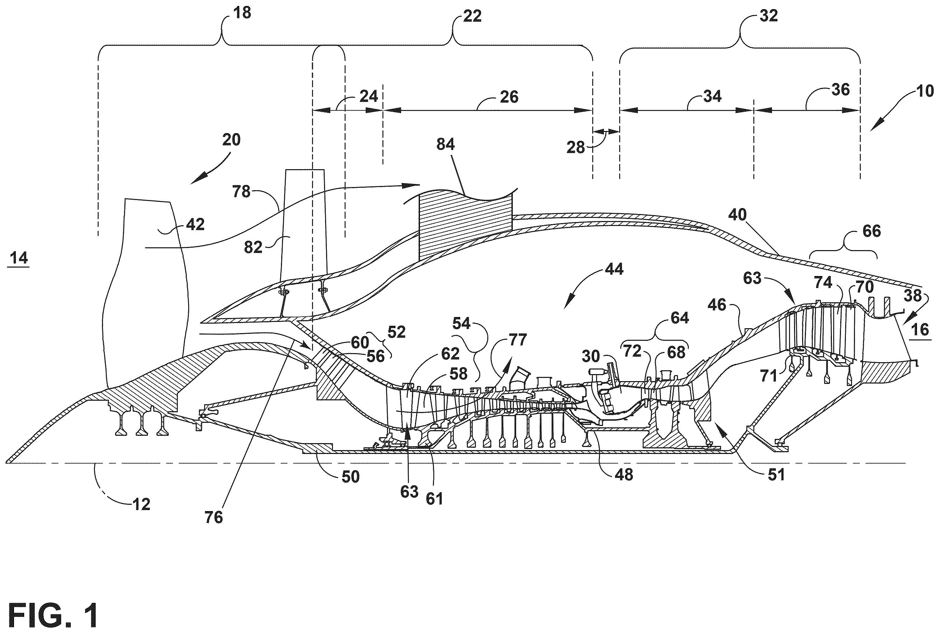

Turning to FIG. 1, a schematic cross-sectional diagram of an exemplary turbine engine 10 is shown in the form of an open rotor or unducted fan engine for an aircraft. The turbine engine 10 has a generally longitudinally extending axis or engine centerline 12 extending from a forward end 14 to an aft end 16. The turbine engine 10 includes, in a downstream serial flow arrangement: a fan section 18 including a fan 20; a compressor section 22 including a booster or low pressure (LP) compressor 24 and a high pressure (HP) compressor 26; a combustion section 28 including a combustor 30; a turbine section 32 including an HP turbine 34 and an LP turbine 36; and an exhaust section 38.

An exterior surface, defined by a housing or nacelle 40, of the turbine engine 10 extends from the forward end 14 of the turbine engine 10 toward the aft end 16 of the turbine engine 10 and covers at least a portion of the compressor section 22, the combustion section 28, the turbine section 32, and the exhaust section 38. As shown, the fan section 18 is positioned at a forward portion of the nacelle 40 and also forward of the combustion section 28. It is contemplated that the fan section 18 can be positioned axially forward, aft, or in-line with the combustion section 28. That is, a pusher configuration is contemplated, where one or more propulsion devices or sections are located axially aft of the combustion section 28.

In the non-limiting example shown, the fan section 18 includes circumferentially spaced blades or propellers defining a set of rotatable fan blades 42 (also referred to herein as "set of fan blades 42"), as well as circumferentially spaced stationary airfoils defining a set of fan vanes 82. The set of fan vanes 82 can be positioned downstream of the set of fan blades 42. The set of fan blades 42 and the set of fan vanes 82 are disposed radially from and circumferentially about the engine centerline 12. It is also contemplated that multiple sets of fan blades 42 or multiple sets of fan vanes 82 can be provided, such as in an alternating arrangement with fan vanes disposed axially between fan blades in one example. It is further contemplated that the set of fan vanes 82 can rotate such that the set of fan blades 42 rotate in a first direction and the set of fan vanes 82 rotate in a second direction about the engine centerline 12.

The set of fan blades 42 can be mounted in a variety of ways. One such mounting is securing the blades to a central hub or disk, which can be driven by a gearbox of the engine. In an exemplary implementation, the airfoil assembly can include a dovetail received within a complementary slot in the hub. In this manner, any suitable number of composite airfoil assemblies can be mounted circumferentially about the hub to collectively from a rotating assembly.

The compressor section 22, the combustion section 28, and the turbine section 32 are collectively referred to as an engine core 44, which generates combustion gases. The engine core 44 is surrounded by an engine casing 46, which is operatively coupled with a portion of the nacelle 40 of the turbine engine 10.

An HP shaft or spool 48 disposed coaxially about the engine centerline 12 of the turbine engine 10 drivingly connects the HP turbine 34 to the HP compressor 26. An LP shaft or spool 50, which is disposed coaxially about the engine centerline 12 of the turbine engine 10 within a larger diameter annular HP spool 48, drivingly connects the LP turbine 36 to the LP compressor 24 and fan 20. The HP and LP spools 48, 50 are rotatable about the engine centerline 12 and coupled to a set of rotatable elements, which collectively define a rotor 51.

It will be appreciated that the turbine engine 10 can be either a direct drive or integral drive engine utilizing a reduction gearbox coupling the LP shaft or spool 50 to the fan 20.

The LP compressor 24 and the HP compressor 26, respectively, include a set of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 are provided in a ring and extend radially outwardly relative to the engine centerline 12, from a blade platform to a blade tip, while the corresponding static compressor vanes 60, 62 are positioned upstream of and adjacent to the compressor blades 56, 58. It is noted that the number of blades, vanes, and compressor stages shown in FIG. 1 were selected for illustrative purposes only, and that other numbers are possible.

The compressor blades 56, 58 for a stage of the compressor section 22 are mounted to a disk 61, which is mounted to the corresponding one of the HP and LP spools 48, 50, with each stage having a corresponding disk 61. The static compressor vanes 60, 62 for a stage of the compressor section 22 are mounted to the engine casing 46 in a circumferential arrangement.

The HP turbine 34 and the LP turbine 36, respectively, include a set of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 are provided in a ring and extend radially outwardly relative to the engine centerline 12, from a blade platform to a blade tip, while corresponding static turbine vanes 72, 74 are positioned upstream of and adjacent to the turbine blades 68, 70. It is noted that the number of blades, vanes, and turbine stages shown in FIG. 1 were selected for illustrative purposes only, and that other numbers are possible.

The turbine blades 68, 70 for a stage of the turbine section 32 are mounted to a disk 71, which is mounted to the corresponding one of the HP and LP spools 48, 50, with each stage having a dedicated disk 71. The static turbine vanes 72, 74 for a stage of the turbine section 32 are mounted to the engine casing 46 in a circumferential arrangement.

Rotary portions of the turbine engine 10, such as the blades 56, 58, 68, 70 among the compressor section 22 and the turbine section 32 are also referred to individually or collectively as the rotor 51. As such, the rotor 51 refers to the combination of rotating elements throughout the turbine engine 10.

Complementary to the rotary portions, the stationary portions of the turbine engine 10, such as the static vanes 60, 62, 72, 74 among the compressor section 22 and the turbine section 32 are also referred to individually or collectively as a stator 63. As such, the stator 63 refers to the combination of non-rotating elements throughout the turbine engine 10.

Alternatively, the rotor 51 can be a first rotor and the stationary portions of the turbine engine 10, such as the static vanes 60, 62, 72, 74 among the compressor section 22 and the turbine section 32 can be coupled to a second rotor located radially outward of the first rotor. The first rotor and the second rotor can rotate in opposite directions resulting in a counter rotating engine.

The nacelle 40 is operatively coupled to the turbine engine 10 and covers at least a portion of the engine core 44, the engine casing 46, the exhaust section 38, or a combination thereof. The nacelle 40 can extend axially forward such that a portion of the nacelle 40 overlays or covers a portion of the fan section 18 or a booster section of the turbine engine 10.

During operation of the turbine engine 10, a working airflow 76 enters the engine core 44, and an inlet airflow 78 flows past the fan section 18 over the nacelle 40. The inlet airflow 78 flows through the set of fan blades 42, over at least a portion of the set of fan vanes 82, and the nacelle 40 of the turbine engine 10. The inlet airflow 78 then flows past the set of fan vanes 82, following the curvature of the nacelle 40 and toward the exhaust section 38. At least some of the inlet airflow 78 merges with the working airflow 76 downstream of the exhaust section 38 of the turbine engine 10. In this manner, the working airflow 76 and the inlet airflow 78 collectively form an overall thrust of the turbine engine 10.

The working airflow 76 can be used for combustion within the engine core 44. More specifically, the working airflow 76 flows into the LP compressor 24, which then pressurizes the working airflow 76 thus defining a pressurized airflow that is supplied to the HP compressor 26, which further pressurizes the air. The working airflow 76, or the pressurized airflow, from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the working airflow 76, or exhaust gas, is ultimately discharged from the turbine engine 10 via the exhaust section 38. The driving of the LP turbine 36 drives the LP spool 50 to rotate the fan 20 and the LP compressor 24. The working airflow 76, including the pressurized airflow and the combustion gases, defines a working airflow that flows through the compressor section 22, the combustion section 28, and the turbine section 32 of the turbine engine 10.

A portion of the working airflow 76 can also be drawn as bleed air 77 (e.g., from the compressor section 22). The bleed air 77 provides an airflow to engine components for cooling. The temperature of the working airflow 76 exiting the combustor 30 is significantly increased with respect to the working airflow 76 within the compressor section 22. As such, cooling provided by the bleed air 77 can be used for operating of such engine components in heightened temperature environments or a hot portion of the turbine engine 10. In the context of a turbine engine, the hot portions of the engine are normally downstream of the combustor 30, especially the turbine section 32, with the HP turbine 34 being the hottest portion as it is directly downstream of the combustion section 28.

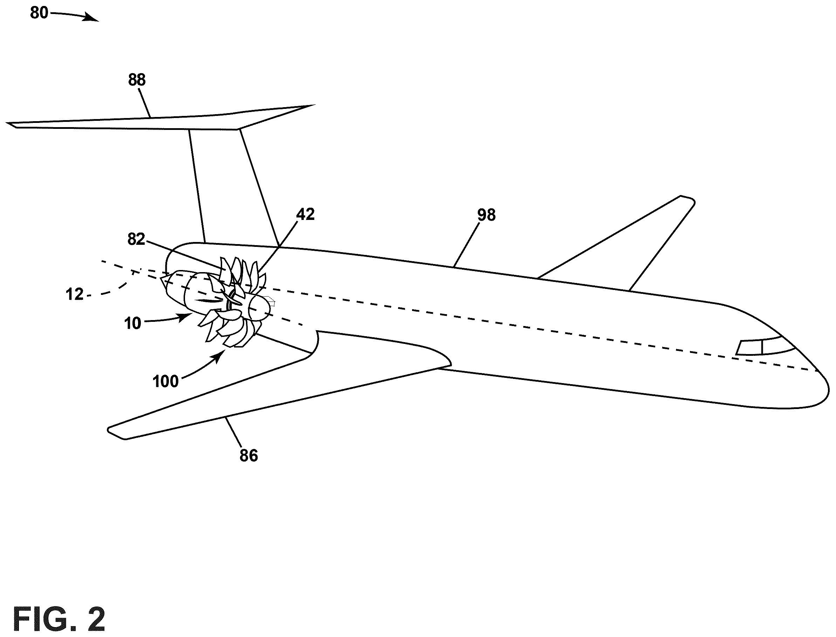

FIG. 2 illustrates an exemplary aircraft 80 having the turbine engine 10 of FIG. 1. The aircraft 80 can have any suitable form. As shown, the aircraft 80 includes a fuselage 98, with wings 86 and a tail wing 88 extending from the fuselage 98.

The turbine engine 10, having engine centerline 12, is shown with the set of fan blades 42 and the set of fan vanes 82. The turbine engine 10 includes at least one airfoil assembly 100. In the non-limiting example shown, the airfoil assembly 100 is provided in the set of fan blades 42, with it being understood that the airfoil assembly 100 can be provided in any suitable portion of the turbine engine 10, including a vane in one of the set of fan vanes 82, the set of static compressor vanes 60, 62, or the set of static turbine vanes 72, 74 (FIG. 1). In other non-limiting examples, the airfoil assembly 100 can blade from the compressor blades 56, 58 or the turbine blades 68, 70 (FIG. 1).

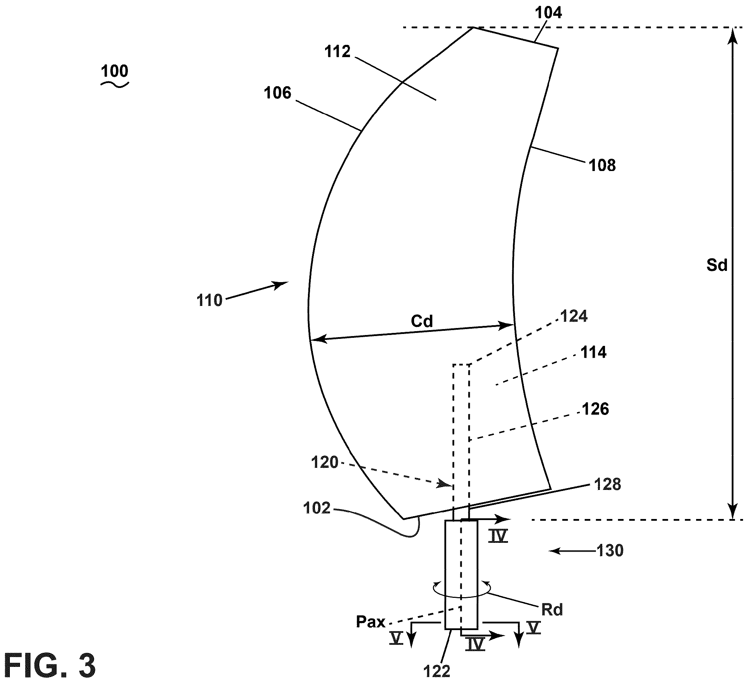

FIG. 3 is a schematic view illustrating the airfoil assembly 100 in one exemplary implementation. As shown, the airfoil assembly 100 can include at least an airfoil body 110, a composite spar 120, and a sleeve assembly 130. The airfoil body 110 can be, by way of non-limiting example, a blade, a vane, an airfoil, or other component of any engine, such as, but not limited to, an electric engine, a hybrid engine, a gas turbine engine, a turboprop engine, a turboshaft engine, or a turbofan engine.

The airfoil body 110 includes a skin or an outer wall 112 bounding an interior 114. The outer wall 112 extends between a root 102 and a tip 104 defining a spanwise direction (Sd). The outer wall 112 also extends between a leading edge 106 and a trailing edge 108 to define a chordwise direction (Cd).

The composite spar 120 extends between a first spar end 122 and a second spar end 124. An interior spar portion 126 of the composite spar 120 is located at the interior 114 of the airfoil body 110. The interior spar portion 126 can be coupled to the interior 114 through any suitable method such as, but not limited to, bonding, adhesion, fastening, or a combination thereof. An exterior spar portion 128 of the composite spar 120 extends outside or exterior of the airfoil body 110. The exterior spar portion 128 is received by the sleeve assembly 130. While illustrated as having a space between the airfoil body 110 and sleeve assembly 130, it is contemplated in a different and non-limiting example that one or more portions of the airfoil body 110 can be in contact with the composite spar 120.

While illustrated schematically as a rectangle, the composite spar 120 can have a varied geometric profile between the first spar end 122 and second spar end 124. For instance, the composite spar 120 can have a first geometric profile at the first spar end 122 transitioning to a second geometric profile at the second spar end 124. One or both of the first spar end 122 and the second spar end 124 can have a geometric profile that is cylindrical, flared, convex, concave, squared, asymmetric, or irregular.

The composite spar 120 can include composite material or metallic composite material. By way of non-limiting example, the composite spar 120 can comprise polymeric material, thermoplastics, a polymer matrix composite (PMC), a ceramic matrix composite (CMC), bismaleimides (BMI), polyimides, metal matrix composites (MMC) or carbon fiber infused with metal fibers. In some examples, the composite spar 120 can include intertwined or braided fibers, where fibers can include single strands, fiber tows, woven fibers, braided fibers, twisted fibers, knitted fibers, yarns, or combinations thereof, that are arranged into twists and subsequently braided to form the composite spar 120.

At least part of the exterior spar portion 128 of the composite spar 120 is received within a hollow interior of the sleeve assembly 130. In some examples, the exterior spar portion 128 can be held in place by frictional contact within the sleeve assembly 130, bonding, adhesion, riveting, fasteners, wedges, paddles, or a combination thereof.

In some examples, the sleeve assembly 130 can include metallic materials such as, but not limited to, titanium, iron, aluminum, stainless steel, or nickel. The sleeve assembly 130 can be coupled or mounted to a rotatable disk, hub, or the like, and thus, can be for mounting the airfoil assembly 100 to such a rotatable disk, hub, or the like.

In some examples, the sleeve assembly 130 can be for mounting the airfoil assembly 100 in a variable-pitch arrangement wherein the airfoil assembly 100 can be at least partially movable or adjustable in pitch with respect to an incoming airflow direction (e.g., parallel to the working airflow 76). As such, during operation of the airfoil assembly 100, the sleeve assembly 130 can rotate about a pitch axis (Pax) in a rotational direction (Rd). As the composite spar 120 can couple the sleeve assembly 130 to the airfoil body 110, rotation of the sleeve assembly 130 about the rotational direction (Rd) can cause the airfoil body 110 to rotate about the pitch axis (Pax). As such, the airfoil body 110 can be a variable pitch airfoil in a variable pitch airfoil assembly.

In a different and non-limiting example, the sleeve assembly 130 can be for mounting the airfoil assembly 100 in a fixed arrangement wherein the airfoil assembly 100 can be stationary with respect to rotating about the pitch axis (Pax).

In yet another different and non-limiting example, the sleeve assembly 130 can be for mounting the airfoil assembly 100 in a fixed arrangement such that the composite airfoil assembly forms a vane (e.g., a vane in the set of fan vanes 82).

Optionally, the sleeve assembly 130 can be coupled to and in communication with a Fan Pitch Actuation System (FPAS). FPAS generally controls the pitch (e.g., angle, orientation) and rotation of the airfoil body 110 about the pitch axis (Pax) which can be used to improve efficiency and/or produce certain flow characteristics during operation of the airfoil assembly 100 (e.g., during flight).

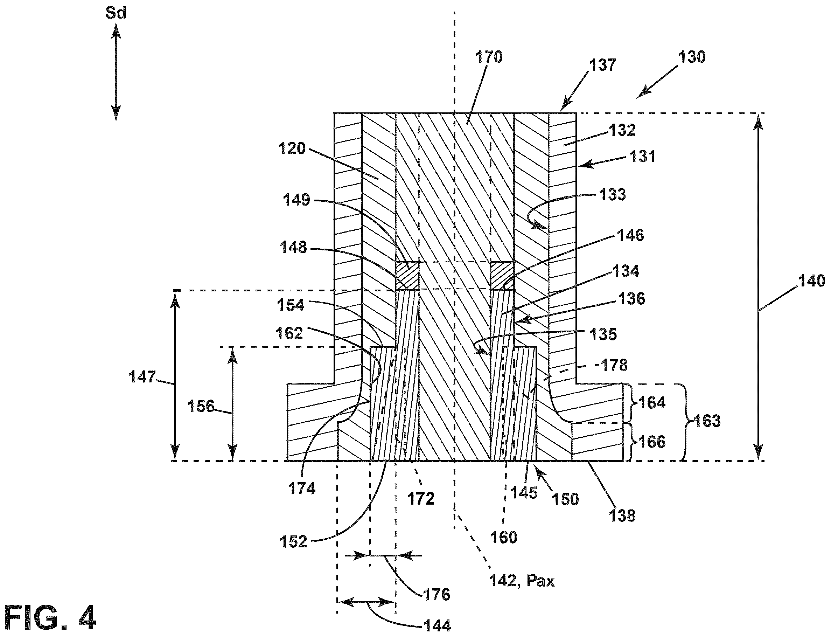

Turning to FIG. 4, a schematic cross-section taken at the line IV-IV in FIG. 3 illustrates the sleeve assembly 130 and the composite spar 120 according to an exemplary implementation. The sleeve assembly 130 includes an outer sleeve 132 and an inner sleeve 134. The outer sleeve 132 has a radially outer surface 131 and a radially inner surface 133. The radially outer surface 131 can at least partially define an outermost surface for the sleeve assembly 130.

A sleeve centerline 142 can be defined centrally within the outer sleeve 132. In some examples, the sleeve centerline 142 can be colinear with the pitch axis (Pax) (FIG. 3).

The inner sleeve 134 has a radially inner surface 135 and a radially outer surface 136. The inner sleeve 134 can, at least in part, be positioned within a portion of a hollow interior of the outer sleeve 132. The inner sleeve 134 can be spaced from the radially inner surface 133 of the outer sleeve 132. Put another way, the outer sleeve 132 can circumscribe the inner sleeve 134 such that the radially inner surface 133 of the outer sleeve 132 is spaced a distance from the radially outer surface 136 of the inner sleeve 134. The radially inner surface 133 of the outer sleeve 132 and the radially outer surface 136 of the inner sleeve 134 can define, in-part, a hollow annulus of the sleeve assembly 130 receiving at least part of the exterior spar portion 128 (FIG. 3). That is, at least part of the exterior spar portion 128 (FIG. 3) of the composite spar 120 is received at the radially inner surface 133 of the outer sleeve 132. A spar thickness 144 can be measured perpendicular to the sleeve centerline 142 from the radially outer surface 136 of the inner sleeve 134 to the radially inner surface 133 of the outer sleeve 132. It is important to note that in some examples discussed further in detail herein, recesses can be present on the radially inner surface 133, the radially outer surface 136, or a combination thereof. In such configurations, the spar thickness 144 is measured neglecting the recesses.

A top portion 137 and a bottom portion 138 extend from the radially outer surface 131 to the radially inner surface 133 of the outer sleeve 132. An outer sleeve length 140 can be measured from the bottom portion 138 to the top portion 137.

The inner sleeve 134 can extend in the spanwise direction (Sd) between a first end 145 and second end 146 to define an inner sleeve length 147. In some examples, the inner sleeve length 147 can be in a range of 30-60% of the outer sleeve length 140. Benefits of such a range include but are not limited to increased cross-sectional area for transferring torque load and improved ease in manufacturing and assembling the sleeve assembly 130.

Optionally, a spar core 170 can couple to an inner sleeve axial end 148 at a transition portion 149. The spar core 170 can be formed of composite material or foam encased with composite material. The transition portion 149 can include an adhesive for coupling the inner sleeve axial end 148 and the spar core 170.

The airfoil assembly 100 further includes a set of paddles 150 formed with or located on the sleeve assembly 130 prior to locating a portion of the composite spar 120 in the sleeve assembly 130. The set of paddles 150 can include metallic material such as, but not limited to, titanium, iron, aluminum, stainless steel, or nickel. In some examples, the set of paddles 150 can be unitarily formed with the sleeve assembly 130 by machining the sleeve assembly 130 or forming the set of paddles 150 while casting the sleeve assembly 130.

In a different and non-limiting example, the set of paddles 150 can be separably formed from the sleeve assembly 130. As such, a set of sleeve recesses 160 can be machined or cast into the inner sleeve 134, the outer sleeve 132, or a combination thereof to receive one or more paddles in the set of paddles 150. The set of paddles 150 can be held in place by frictional contact with the set of sleeve recesses 160, bonding, adhesion, riveting, fasteners, or a combination thereof.

When the set of paddles 150 are separably formed from the sleeve assembly 130, the set of paddles 150 can, in some examples, be provided to the set of sleeve recesses 160 after the composite spar 120 (e.g., as uncured or partially cured material) is received in the sleeve assembly 130.

A set of spar recesses 162 can be machined into the composite spar 120 (e.g., as cured or partially cured material) to receive the set of paddles 150. It is contemplated that the set of paddles 150 can be received by the composite spar 120 after the composite spar 120 is received in the sleeve assembly 130. Additionally, or alternatively the set of paddles 150 can be received by the sleeve assembly 130 or the composite spar 120 prior to locating a portion of the composite spar 120 in the sleeve assembly 130 . The set of paddles 150 can be coupled to the composite spar 120 or the sleeve assembly 130 by bonding, adhesion, riveting, fasteners, or a combination thereof. The set of paddles 150 can be spaced about the sleeve centerline 142. The set of paddles 150 can extend radially outward relative to the sleeve centerline 142.

The set of paddles 150 can extend in the spanwise direction (Sd) from a paddle base 152 to a paddle tip 154. As illustrated, by way of non-limiting example, the paddle base 152 can align with the bottom portion 138 of the outer sleeve 132. A paddle length 156 can be measured in the spanwise direction (Sd) from the paddle base 152 to the paddle tip 154 of each paddle in the set of paddles 150. The paddle length 156 can be in a range of 5% to 100% of the outer sleeve length 140. For example, the paddle length 156 can be in a range of 10% to 50%, inclusive of the endpoints, of the outer sleeve length 140. Benefits of such a range include but are not limited to an increase in transfer of torque from the airfoil body 110 (FIG. 3) via the composite spar 120 to the inner sleeve 134, the outer sleeve 132, or combination thereof. While illustrated as having a uniform paddle length 156, it is contemplated that paddles in the set of paddles 150 can extend at varying paddle lengths 156.

Each paddle in the set of paddles 150 can extend radially outward relative to the sleeve centerline 142 from an inner paddle end 172 to an outer paddle end 174. The inner paddle end 172 can be a point of the paddle located at or nearest the radially outer surface 136 of the inner sleeve 134 when the set of paddles 150 is formed with or mounted to the sleeve assembly 130. Further, the outer paddle end 174 can be a point of the paddle located at or nearest the radially inner surface 133 of the outer sleeve 132 when the set of paddles 150 is formed with or mounted to the sleeve assembly 130. A paddle extension distance 176 can be measured perpendicular to the sleeve centerline 142 from the inner paddle end 172 to the outer paddle end 174. While the set of paddles 150 is illustrated as having a uniform paddle extension distance 176, the paddle extension distance of a paddle in the set of paddles 150 can vary between any two locations along the paddle length 156. Dotted lines 178 illustrate, by way of non-limiting example, an outer paddle end having a changing paddle extension distance 176.

The paddle extension distance 176 can be less than or substantially equal to the spar thickness 144 when measured perpendicular to the sleeve centerline 142. In the non-limiting example shown, the paddle extension distance 176 is less than the spar thickness 144. As used herein, "substantially equal" means that one dimension is within 5% of another dimension. That is, the paddle extension distance 176 is substantially equal to the spar thickness 144 when the paddle extension distance 176 is within 5% or less of the spar thickness 144.

It is noted that the number of paddles in the set of paddles 150 shown in FIG. 4 is selected for illustrative purposes only, and that any number of paddles are possible, including having one paddle. It is contemplated that the number of paddles can vary according to load conditions of the airfoil assembly 100 (FIG. 3). In some examples, such as an airfoil assembly utilized under relatively small loads, one paddle can be utilized to improve torque transfer and improve ease in manufacturing and assembling the sleeve assembly 130. In a different and non-limiting example, such as an airfoil assembly utilized under relatively large loads, two or more paddles can be utilized to improve torque transfer and increase surface area for transferring torque load. It is further contemplated that the number of paddles can be three or more depending on the number of spar portions, the load required to transfer, or any combination thereof.

The composite spar 120 can include a flared base 163. The flared base 163 can be a portion of the composite spar 120 having a greater extension from the sleeve centerline 142 than a remaining portion of the composite spar 120.

The flared base 163 can include a curved portion 164 adjacent to a parallel portion 166. The curved portion 164 can be a portion of a radial exterior surface of the composite spar 120 that forms a concave shape, as illustrated by way of example, or a convex shape relative to the sleeve centerline 142. While illustrated as having the curved portion 164 and the parallel portion 166, it is contemplated that the flared base 163 can be one of the curved portion 164 or the parallel portion 166. Further, any number of curves or linear portions in the flared base 163 are contemplated. The curved portion 164 of the flared base 163 can further improve engagement between the composite spar 120 and the sleeve assembly 130.

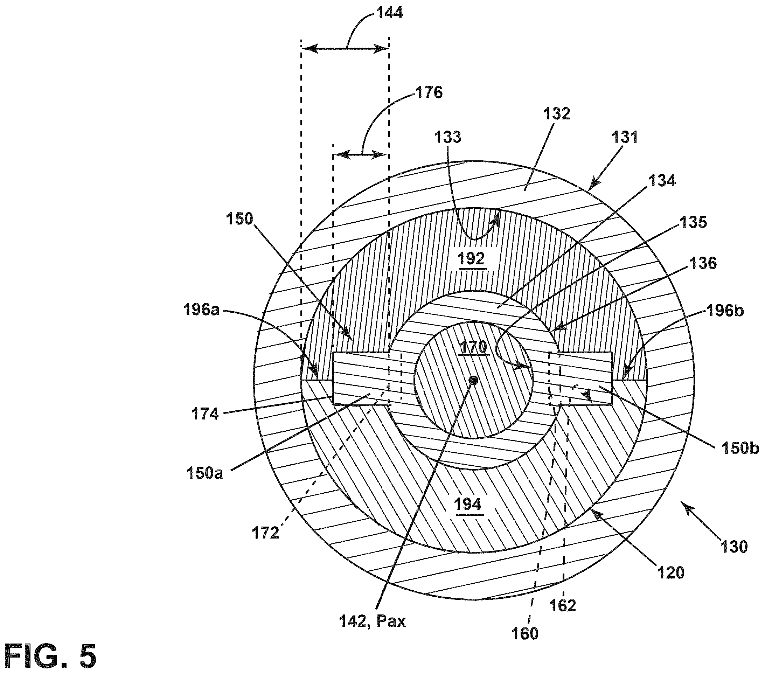

FIG. 5 illustrates a cross-sectional view of the composite spar 120 and the sleeve assembly 130 along the line V-V shown in FIG. 3. The composite spar 120 can comprise one or more spar preforms or lay-ups. A preform can include one or more layers of a composite material molded to shape a portion or piece of the composite spar 120. As illustrated, by way of a non-limiting example, the composite spar 120 can be a multi-piece composite spar and comprise at least a first spar portion 192 and a second spar portion 194, as shown. The first spar portion 192 and the second spar portion 194 can comprise the same material, same number of layers, same reinforcement material, or any combination thereof. However, it is contemplated in a different and non-limiting example that the first spar portion 192 and the second spar portion 194 can comprise different materials, different number of composite layers, different reinforcement material, or any combination thereof.

The first spar portion 192 and the second spar portion 194 can extend in the spanwise direction (Sd) (FIG. 4) and define a set of abutments 196a, 196b or split lines in the composite spar 120. The first spar portion 192 and the second spar portion 194 can be coupled by the set of abutments 196a, 196b through any suitable method such as, but not limited to, bonding, adhesion, fastening, or a combination thereof. The first spar portion 192 and the second spar portion 194 can arc about the sleeve centerline 142. That is, the first spar portion 192 and the second spar portion 194 can arc about the inner sleeve 134 to circumscribe or partially circumscribe the inner sleeve 134.

At least one paddle in the set of paddles 150 can be located between the first spar portion 192 and the second spar portion 194. Put another way, the at least one paddle can be located at an abutment in the set of abutments 196a, 196b. As illustrated, by way of example, the set of paddles 150 can include a first paddle 150a and a second paddle 150b. The first paddle 150a and the second paddle 150b can extend radially outward from the inner sleeve 134, where the second paddle 150b is circumferentially spaced from the first paddle 150a. The first paddle 150a and the second paddle 150b can be located between the first spar portion 192 and the second spar portion 194 at the set of abutments 196a, 196b.

The paddle extension distance 176 of the first paddle 150a and the second paddle 150b are illustrated as less than the spar thickness 144, where the spar thickness 144 is measured from the radially inner surface 133 of the outer sleeve 132 and the radially outer surface 136 of the inner sleeve 134 after receiving the composite spar 120 in the sleeve assembly 130.

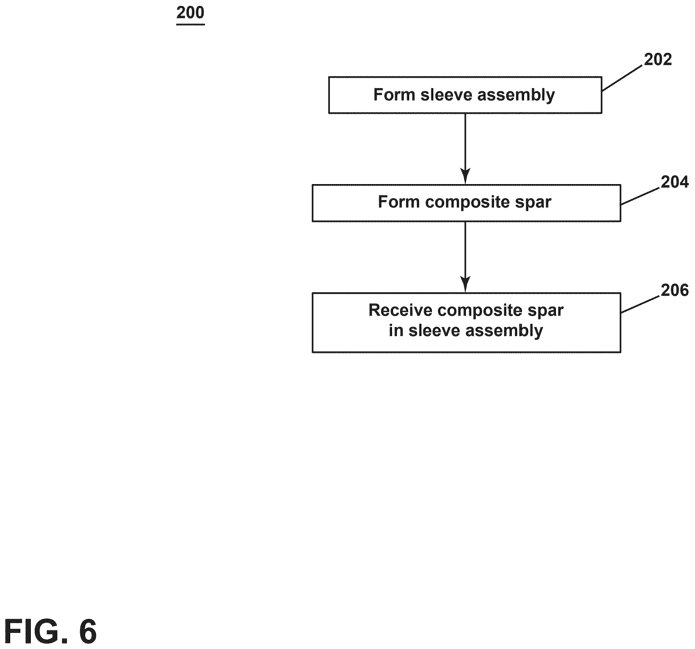

FIG. 6 is a method 200 of forming the airfoil assembly 100 for a turbine engine (e.g., turbine engine 10) of FIGS. 3-5.

At step 202, the sleeve assembly 130 can be formed from one or more metal materials. The sleeve assembly 130 includes the outer sleeve 132 and the inner sleeve 134.

Optionally, the sleeve assembly 130 can be machined or cast to include the set of sleeve recesses 160. That is, the set of sleeve recesses 160 can be machined, cast, or printed into the inner sleeve 134, the outer sleeve 132, or a combination thereof.

The set of paddles 150 can be formed from one or more metal materials. One or more paddles of the set of paddles 150 can be separably formed from the sleeve assembly 130. The set of paddles 150 can be provided to the set of sleeve recesses 160 before or after the composite spar 120 is received in the sleeve assembly 130. A paddle in the set of paddles 150 can be held in place by frictional contact with a sleeve recess in the set of sleeve recesses 160 and can, in some examples, include bonding, adhesion, riveting, fasteners, or a combination thereof.

Alternatively, one or more paddles in the set of paddles can be unitarily formed with the sleeve assembly 130. That is, the set of paddles 150 can be unitarily formed with the inner sleeve 134, the outer sleeve 132, or a combination thereof.

At step 204, the composite spar 120 can be formed by laying up composite material to create one or more spar preforms. The composite spar 120 can be a multi-piece composite spar and include at least two or more spar preforms. As such, the composite spar 120 can comprise at least the first spar portion 192 and the second spar portion 194. The first spar portion 192 and the second spar portion 194 can be coupled or otherwise assembled to form the composite spar 120. The first spar portion 192 and the second spar portion 194 can be coupled by the set of abutments 196a,196b.

The composite spar 120 can be partially cured or completely cured. The set of spar recesses 162 can be machined into the partially cured or completely cured composite spar 120.

Alternatively, at least a portion of the set of spar recesses 162 can be formed in the composite spar 120 prior to curing. That is, during lay-up of the composite spar 120, the forms, molds, or user can include recesses in the spar that will result in the set of spar recesses 162 that will receive the set of paddles 150.

Optionally, the composite spar 120 includes a spar core 170 formed of composite material or foam.

At step 206, the sleeve assembly 130 can receive the composite spar 120 such that the set of paddles 150 is received by the set of spar recesses 162. It is contemplated that the composite spar 120 is located relative to one or more portions of the sleeve assembly 130 prior to receiving the set of paddles 150 at the set of spar recesses 162.

Optionally, the set of abutments 196a,196b can radially align with one or more recesses in the set of sleeve recesses 160 or one or more paddles in the set of paddles 150. As such, one or more paddles in the set of paddles 150 can be located between the first spar portion 192 and the second spar portion 194 (e.g., at one or both abutments 196a,196b). The sleeve assembly 130, the composite spar 120, the set of paddles 150, or a combination thereof can be coupled by welding, bonding, adhesion, riveting, fasteners, or a combination thereof.

In a different and non-limiting example, when a force is applied to the airfoil body 110 (FIG. 3) and urges rotation in the airfoil body 110 (FIG. 3) and a respectively coupled composite spar (i.e., the composite spar 120), frictional forces between the composite spar 120 and the sleeve assembly 130 can prevent rotation, at least to some degree, in the airfoil body 110 (FIG. 3) and the composite spar 120.

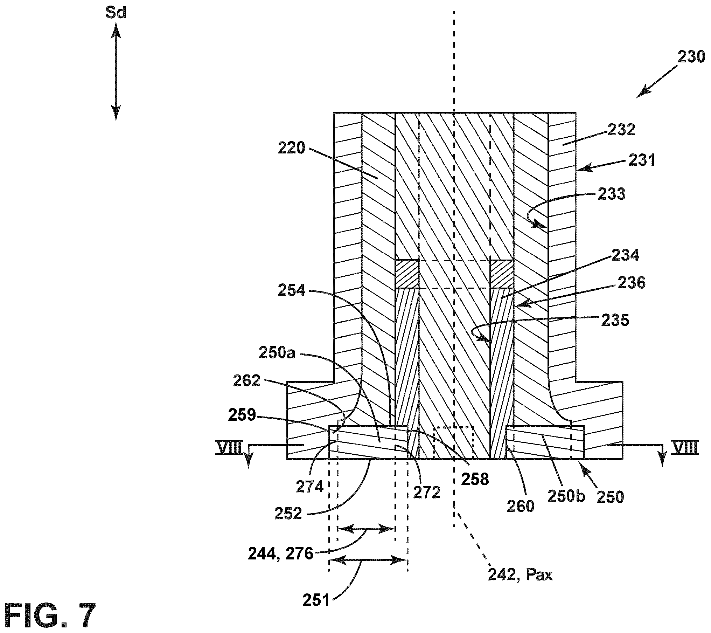

FIG. 7 illustrates a sleeve assembly 230 and a composite spar 220 similar to the sleeve assembly 130 and the composite spar 120 of FIG. 4. Therefore, like parts will be identified with like numerals increased by one hundred (100) with it being understood that the description of the sleeve assembly 130 and the composite spar 120 (FIGS. 4) can apply to the sleeve assembly 230 and the composite spar 220 unless noted otherwise.

The sleeve assembly 230 includes an outer sleeve 232 and an inner sleeve 234. The outer sleeve 232 has a radially outer surface 231 and a radially inner surface 233. A sleeve centerline 242 can be defined centrally within the outer sleeve 232. The inner sleeve 234 has a radially inner surface 235 and a radially outer surface 236. The inner sleeve 234 can, at least in part, be positioned within a portion of a hollow interior of the outer sleeve 232.

A set of sleeve recesses 260 can include recesses in the inner sleeve 234, the outer sleeve 232, or combination thereof. A set of spar recesses 262 can correspond to the set of sleeve recesses 260.

A set of paddles 250 can be received by the set of sleeve recesses 260 and the set of spar recesses 262. The set of paddles 250 can extend in the spanwise direction (Sd) from a paddle base 252 to a paddle tip 254. The set of paddles 250 is illustrated as a first paddle 250a and a second paddle 250b. The set of paddles 250 can span a spar thickness 244. That is, one or more paddles in the set of paddles 250 extend between or couple the inner sleeve 234 to the outer sleeve 232. In such a configuration, a paddle extension distance 276 is substantially equal to the spar thickness 244.

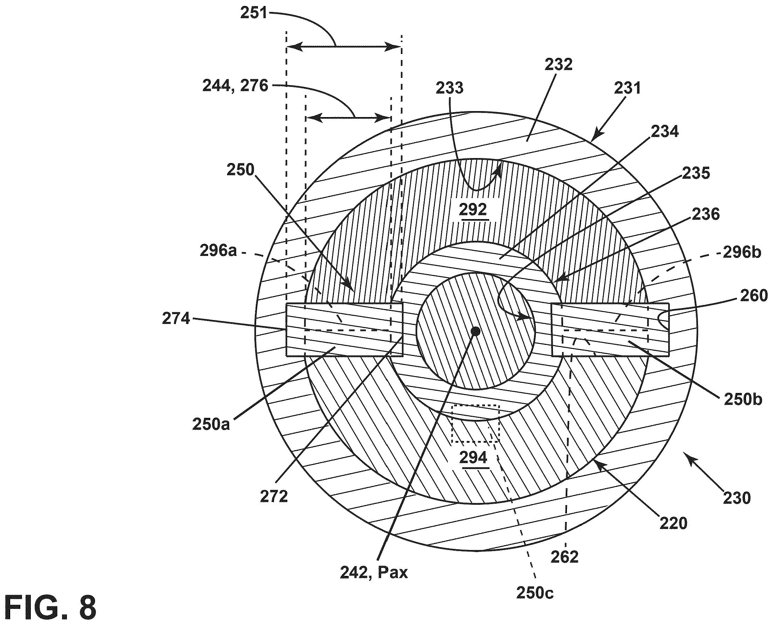

FIG. 8 illustrates a cross-sectional view of the composite spar 220 and the sleeve assembly 230 along the line VIII-VIII shown in FIG. 7.

The composite spar 220 is illustrated, by way of example, as defined by a first spar portion 292 and a second spar portion 294. The first spar portion 292 and the second spar portion 294 intersect in two locations to define a set of abutments 296a, 296b. The first paddle 250a and the second paddle 250b can be located between the first spar portion 292 and the second spar portion 294.

Each paddle in the set of paddles 250 extends radially outward relative to the sleeve centerline 142 from an inner paddle end 272 located at or nearest the radially outer surface 236 of the inner sleeve 234 to an outer paddle end 274 located at or nearest the radially inner surface 133 of the outer sleeve 132.

In some examples, as illustrated, when a paddle in the set of paddles is separately formed from the sleeve assembly 230, the paddle can include a portion radially extending inward from the inner paddle end 272 to define an innermost paddle end 258, a portion radially extending radially outward from the outer paddle end 274 to define an outermost paddle end 259 or include both. A total paddle width 251 can be measured from the innermost paddle end 258 to the outermost paddle end 259. The total paddle width 251 can be greater than the spar thickness 244, the paddle extension distance 276, or both.

Alternatively, the set of paddles 250, by way of non-limiting example, can be unitarily formed with the inner sleeve 234 and received by recesses in the set of sleeve recesses 260 located in the outer sleeve 232. In such a configuration, the innermost paddle end 258 is defined at the inner paddle end 272 and the total paddle width can be measured from the inner paddle end 272 to the outermost paddle end 259.

Optionally, the set of paddles 250 can include a third paddle 250c radially spaced from the first paddle 250a and the second paddle 250b. The third paddle 250c is illustrated, by way of example, as coupled to the inner sleeve 234. That is, a portion of the third paddle 250c can be received by the inner sleeve 234. Alternatively, the third paddle 250c can be unitarily formed with the inner sleeve 234.

The third paddle 250c is located, by way of example, at the second spar portion 294. That is, a set of spar recesses 262 can include recesses at the set of abutments 296a, 296b to receive at least the first paddle 250a and the second paddle 250b and can further include one or more recesses in the first spar portion 292, the second spar portion 294, or a combination thereof to receive any number of additional paddles in the set of paddles 150.

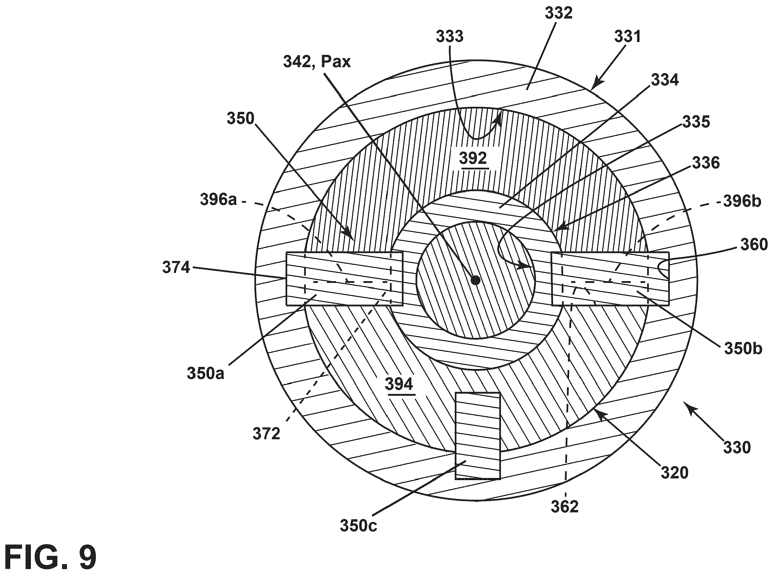

FIG. 9 illustrates a composite spar 320 and a sleeve assembly 330 similar to the sleeve assembly 130, 230 and the composite spar 120, 220 of FIGS. 4 and FIG. 7. Therefore, like parts will be identified with like numerals further increased by one hundred (100) with it being understood that the description of the sleeve assembly 130, 230 and the composite spar 120, 220 can apply to the sleeve assembly 330 and the composite spar 320 unless noted otherwise.

The sleeve assembly 330 includes an outer sleeve 332 and an inner sleeve 334. The outer sleeve 332 has a radially outer surface 331 and a radially inner surface 333. A sleeve centerline 342 can be defined centrally within the outer sleeve 332. An inner sleeve 334 has a radially inner surface 335 and a radially outer surface 336. The inner sleeve 334 can, at least in part, be positioned within a portion of a hollow interior of the outer sleeve 332.

A set of sleeve recesses 360 can include recesses in the inner sleeve 334, the outer sleeve 332, or combination thereof. A set of spar recesses 362 can correspond to the set of sleeve recesses 360.

A set of paddles 350 can be received by the set of sleeve recesses 360 and the set of spar recesses 362. Each paddle in the set of paddles 350 can extend radially outward relative to the sleeve centerline 342 from an inner paddle end 372 to an outer paddle end 374. The set of paddles 350 is illustrated as a first paddle 350a, a second paddle 350b, and a third paddle 350c.

The composite spar 320 is illustrated, by way of example, as defined by a first spar portion 392 and a second spar portion 394. The first spar portion 392 and the second spar portion 394 intersect in two locations to define a set of abutments 396a, 396b.

The first paddle 350a and the second paddle 350b are illustrated, by way of example, as extending from the inner sleeve 334 to the outer sleeve 332. The first paddle 350a and the second paddle 350b are located, by way of example at intersection of the first spar portion 392 and the second spar portion 394. That is, the first paddle 350a and the second paddle 350b are locate at the set of abutments 396a, 396b.

The third paddle 350c is illustrated, by way of example, as coupled to the outer sleeve 332. That is, a portion of the third paddle 350c can be received by the outer sleeve 332. Alternatively, the third paddle 350c can be unitarily formed with the outer sleeve 332.

The third paddle 350c is located, by way of example, at the second spar portion 394. That is, a set of spar recesses 362 can include recesses at the set of abutments 396a, 396b, and one or more recesses at the first spar portion 392, the second spar portion 394, or any combination thereof.

Benefits associated with the composite spar as described herein include improved engagement between the composite spar and the sleeve assembly. Additional benefits include improved torque transfer from the composite spar to the metal sleeve under loading conditions due to the set of paddles extending between the inner sleeve and the outer sleeve. The set of paddles can support the adjoined sleeve assembly and the composite spar for improved rotation or a resistance to rotation about a common axis (e.g., pitch axis (Pax)). In some examples, when a load is received by airfoil body, the airfoil body and a respectively coupled composite spar can rotate about the pitch axis (Pax). The set of paddles can offer a redundant load path, where a load is received by more than just a connection between the composite spar and the inner and outer sleeves. This additional load path essentially takes a shear load between the composite spar and the metal inner and outer sleeves and converts it to a circumferential load in the fibers of the composite wrap or composite body.

Additional benefits can further include the improved bonding between composite material and metallic material, as the paddles secures the composite spar to the metallic sleeve. The improved bonding can secure the composite material and metallic material in the absence or wear of adhesive. The improved bonding can also secure the composite material and metallic material during an ingestion event or other high loading event.

Yet another benefit is that the composite spar is lightweight compared to a metal spar, and can still provide strength and durability within the airfoil assembly.

Further aspects of the disclosure are provided by the subject matter of the following clauses:

An airfoil assembly for an engine, the airfoil assembly comprising: an airfoil body comprising an outer wall bounding an interior, the outer wall extending between a leading edge and a trailing edge in a chordwise direction, and between a root and a tip in a spanwise direction; a composite spar having an interior spar portion located at the interior of the airfoil body and an exterior spar portion exterior of the airfoil body; a sleeve assembly comprising an outer sleeve and an inner sleeve circumscribed by the outer sleeve, wherein at least part of the exterior spar portion of the composite spar is received at a radially outer surface of the inner sleeve; and a set of paddles extending from the inner sleeve or the outer sleeve towards the other of the inner sleeve or the outer sleeve.

The airfoil assembly of any proceeding clause, wherein the airfoil assembly is a variable pitch airfoil assembly.

The airfoil assembly of any proceeding clause, wherein the set of paddles is metallic.

The airfoil assembly of any proceeding clause, wherein the composite spar comprises at least a first spar portion and a second spar portion, wherein the first spar portion and the second spar portion extend in the spanwise direction and a set of abutments are defined between the first spar portion and the second spar portion.

The airfoil assembly of any proceeding clause, wherein at least part of the exterior spar portion is received at a radially inner surface of the outer sleeve.

The airfoil assembly of any proceeding clause, wherein the sleeve assembly defines a sleeve centerline and a spar thickness measured perpendicular to the sleeve centerline from the radially outer surface of the inner sleeve to a radially inner surface of the outer sleeve.

The airfoil assembly of any proceeding clause, wherein at least one paddle in the set of paddles has a paddle extension distance measured from an inner paddle end located at the radially outer surface of the inner sleeve toward the outer sleeve to an outer paddle end, and wherein the paddle extension distance is less than the spar thickness.

The airfoil assembly of any proceeding clause, wherein at least one paddle in the set of paddles has a paddle extension distance measured from an inner paddle end located at the radially outer surface of the inner sleeve toward the outer sleeve to an outer paddle end, and wherein the paddle extension distance is equal to the spar thickness.

The airfoil assembly of any proceeding clause, wherein the composite spar comprises at least a first spar portion and a second spar portion, wherein at least one paddle in the set of paddles is located between the first spar portion and the second spar portion.

The airfoil assembly of any proceeding clause, wherein at least one paddle in the set of paddles extends radially outward from the inner sleeve and is received by a sleeve recess in a radially inner surface of the outer sleeve.

The airfoil assembly of any proceeding clause, wherein the composite spar comprises at least a first spar portion and a second spar portion, wherein at least one paddle in the set of paddles is located between the first spar portion and the second spar portion.

The airfoil assembly of any proceeding clause, wherein the at least one paddle is a first paddle and the set of paddles further comprises a second paddle extending radially outward from the inner sleeve.

The airfoil assembly of any proceeding clause, wherein the second paddle is circumferentially spaced from the first paddle and located between the first spar portion and the second spar portion.

The airfoil assembly of any proceeding clause, wherein the second paddle extends from an inner paddle end at the radially outer surface of the inner sleeve to an outer paddle end located between the radially outer surface of the inner sleeve and the radially inner surface of the outer sleeve.

The airfoil assembly of any proceeding clause, wherein the composite spar comprises at least a first spar portion and a second spar portion, wherein the set of paddles includes a first paddle located between the first spar portion and the second spar portion, a second paddle located between the first spar portion and the second spar portion, and the second paddle is circumferentially spaced from the first paddle.

The airfoil assembly of any proceeding clause, wherein a third paddle in the set of paddles is circumferentially spaced from the first paddle and the second paddle, and the third paddle extends radially from the outer sleeve through one of the first spar portion or the second spar portion.

The airfoil assembly of any proceeding clause, wherein a third paddle in the set of paddles is circumferentially spaced from the first paddle and the second paddle, and the third paddle extends from the inner sleeve through at least a portion of the first spar portion or at least a portion of the second spar portion.

The airfoil assembly of any proceeding clause, wherein the second paddle extends from an inner paddle end at the radially outer surface of the inner sleeve to an outer paddle end located at a recess in the radially inner surface of the outer sleeve.

The airfoil assembly of any proceeding clause, wherein a third paddle in the set of paddles is circumferentially spaced from the first paddle and the second paddle, the third paddle extends radially outward to the radially inner surface of the outer sleeve, and the third paddle passes through a portion of the first spar portion or the second spar portion.

The airfoil assembly of any proceeding clause, wherein the set of paddles includes only one paddle.

The airfoil assembly of any proceeding clause, wherein the inner sleeve has an inner sleeve length measured in the spanwise direction, the outer sleeve has an outer sleeve length measured in the spanwise direction, and the inner sleeve length is 30-60% of the outer sleeve length.

The airfoil assembly of any proceeding clause, wherein each paddle in the set of paddles has a paddle length measured in the spanwise direction, and the paddle length is 5% to 100% of the outer sleeve length.

The airfoil assembly of any proceeding clause, wherein the paddle length is 10% to 50%, inclusive of the endpoints, of the outer sleeve length.

The airfoil assembly of any proceeding clause, wherein the airfoil assembly is mounted in a fixed arrangement.

The airfoil assembly of any proceeding clause, wherein the sleeve assembly is coupled to a Fan Pitch Actuation System.

The airfoil assembly of any proceeding clause, wherein the sleeve assembly further comprises a spar core comprising composite material coupling to an axial end of the inner sleeve.

The airfoil assembly of any proceeding clause, wherein the sleeve assembly further comprises a transition portion coupling the spar core and the axial end of the inner sleeve.

The airfoil assembly of any proceeding clause, wherein at least one paddle in the set of paddles is unitarily formed with the sleeve assembly.

The airfoil assembly of any proceeding clause, wherein at least one paddle in the set of paddles is separably formed from the sleeve assembly.

The airfoil assembly of any proceeding clause, wherein at least one paddle in the set of paddles is separably formed from the sleeve assembly.

The airfoil assembly of any proceeding clause, wherein the composite spar includes a flared base.

The airfoil assembly of any proceeding clause, wherein at least one paddle in the set of paddles extends radially outward from the outer sleeve into one or both of the first spar portion and the second spar portion.

The airfoil assembly of any proceeding clause, wherein a paddle length is measured in the spanwise direction from a paddle base to a paddle tip, and the paddle extension distance of at least one paddle in the set of paddles varies along the paddle length.

A turbine engine comprising: a fan section, a compressor section, a combustion section, and a turbine section in serial flow arrangement, and defining an engine centerline, and an airfoil assembly rotatable about the engine centerline, the airfoil assembly comprising: an airfoil body comprising an outer wall bounding an interior, the outer wall extending between a leading edge and a trailing edge in a chordwise direction, and between a root and a tip in a spanwise direction; a composite spar having an interior spar portion located at the interior of the airfoil body and an exterior spar portion exterior of the airfoil body, the composite spar comprising at least a first spar portion and a second spar portion; a sleeve assembly comprising an outer sleeve and an inner sleeve circumscribed by the outer sleeve, wherein at least part of the exterior spar portion of the composite spar is received at a radially outer surface of the inner sleeve; and a set of paddles extending from the inner sleeve or the outer sleeve towards the other of the inner sleeve or the outer sleeve.

The turbine engine of any proceeding clause, wherein the composite spar comprises at least a first spar portion and a second spar portion, wherein at least one paddle in the set of paddles is located between the first spar portion and the second spar portion.

The turbine engine of any proceeding clause, wherein the airfoil assembly is provided within the fan section.

The turbine engine of any proceeding clause, wherein the airfoil assembly is a variable pitch airfoil assembly.

The turbine engine of any proceeding clause, wherein the set of paddles is metallic.

The turbine engine of any proceeding clause, wherein the composite spar comprises at least a first spar portion and a second spar portion, wherein the first spar portion and the second spar portion extend in the spanwise direction and a set of abutments are defined between the first spar portion and the second spar portion.

The turbine engine of any proceeding clause, wherein at least part of the exterior spar portion is received at a radially inner surface of the outer sleeve.

The turbine engine of any proceeding clause, wherein the sleeve assembly defines a sleeve centerline and a spar thickness measured perpendicular to the sleeve centerline from the radially outer surface of the inner sleeve to a radially inner surface of the outer sleeve.

The turbine engine of any proceeding clause, wherein at least one paddle in the set of paddles has a paddle extension distance measured from an inner paddle end located at the radially outer surface of the inner sleeve toward the outer sleeve to an outer paddle end, and wherein the paddle extension distance is less than the spar thickness.

The turbine engine of any proceeding clause, wherein at least one paddle in the set of paddles has a paddle extension distance measured from an inner paddle end located at the radially outer surface of the inner sleeve toward the outer sleeve to an outer paddle end, and wherein the paddle extension distance is equal to the spar thickness.

The turbine engine of any proceeding clause, wherein at least one paddle in the set of paddles extends radially outward from the inner sleeve and is received by a sleeve recess in a radially inner surface of the outer sleeve.

The turbine engine of any proceeding clause, wherein the composite spar comprises at least a first spar portion and a second spar portion, wherein at least one paddle in the set of paddles is located between the first spar portion and the second spar portion.

The turbine engine of any proceeding clause, wherein the at least one paddle is a first paddle and the set of paddles further comprises a second paddle extending radially outward from the inner sleeve.

The turbine engine of any proceeding clause, wherein the second paddle is circumferentially spaced from the first paddle and located between the first spar portion and the second spar portion.

The turbine engine of any proceeding clause, wherein the second paddle extends from an inner paddle end at the radially outer surface of the inner sleeve to an outer paddle end located between the radially outer surface of the inner sleeve and the radially inner surface of the outer sleeve.

The turbine engine of any proceeding clause, wherein the composite spar comprises at least a first spar portion and a second spar portion, wherein the set of paddles includes a first paddle located between the first spar portion and the second spar portion, a second paddle located between the first spar portion and the second spar portion, and the second paddle is circumferentially spaced from the first paddle.

The turbine engine of any proceeding clause, wherein a third paddle in the set of paddles is circumferentially spaced from the first paddle and the second paddle, and the third paddle extends radially from the outer sleeve through one of the first spar portion or the second spar portion.

The turbine engine of any proceeding clause, wherein a third paddle in the set of paddles is circumferentially spaced from the first paddle and the second paddle, and the third paddle extends from the inner sleeve through at least a portion of the first spar portion or at least a portion of the second spar portion.

The turbine engine of any proceeding clause, wherein the second paddle extends from an inner paddle end at the radially outer surface of the inner sleeve to an outer paddle end located at a recess in the radially inner surface of the outer sleeve.

The turbine engine of any proceeding clause, wherein the second paddle extends from an inner paddle end at the radially outer surface of the inner sleeve to an outer paddle end located at a recess in the radially inner surface of the outer sleeve.

The turbine engine of any proceeding clause, wherein a third paddle in the set of paddles is circumferentially spaced from the first paddle and the second paddle, the third paddle extends radially outward to the radially inner surface of the outer sleeve, and the third paddle passes through a portion of the first spar portion or the second spar portion.

The turbine engine of any proceeding clause, wherein the set of paddles includes only one paddle.

The turbine engine of any proceeding clause, wherein the inner sleeve has an inner sleeve length measured in the spanwise direction, the outer sleeve has an outer sleeve length measured in the spanwise direction, and the inner sleeve length is 30-60% of the outer sleeve length.

The turbine engine of any proceeding clause, wherein each paddle in the set of paddles has a paddle length measured in the spanwise direction, and the paddle length is 5% to 100% of the outer sleeve length.

The turbine engine of any proceeding clause, wherein the paddle length is 10% to 50%, inclusive of the endpoints, of the outer sleeve length.

The turbine engine of any proceeding clause, wherein the airfoil assembly is mounted in a fixed arrangement.

The turbine engine of any proceeding clause, wherein the sleeve assembly is coupled to a Fan Pitch Actuation System.

The turbine engine of any proceeding clause, wherein the sleeve assembly further comprises a spar core comprising composite material coupling to an axial end of the inner sleeve.

The turbine engine of any proceeding clause, wherein the sleeve assembly further comprises a transition portion coupling the spar core and the axial end of the inner sleeve.

The turbine engine of any proceeding clause, wherein at least one paddle in the set of paddles is unitarily formed with the sleeve assembly.

The turbine engine of any proceeding clause, wherein at least one paddle in the set of paddles is separably formed from the sleeve assembly.

The turbine engine of any proceeding clause, wherein at least one paddle in the set of paddles is separably formed from the sleeve assembly.

The turbine engine of any proceeding clause, wherein the composite spar includes a flared base.

The turbine engine of any proceeding clause, wherein at least one paddle in the set of paddles extends radially outward from the outer sleeve into one or both of the first spar portion and the second spar portion.

The turbine engine of any proceeding clause, wherein a paddle length is measured in the spanwise direction from a paddle base to a paddle tip, and the paddle extension distance of at least one paddle in the set of paddles varies along the paddle length.

## Claims

1. An airfoil assembly (100) for an engine (10), the airfoil assembly (100) comprising:
an airfoil body (110) comprising an outer wall (112) bounding an interior (114), the outer wall (112) extending between a leading edge (106) and a trailing edge (108) in a chordwise direction, and between a root (102) and a tip (104) in a spanwise direction;
a composite spar (120, 220, 320) having an interior (114) spar portion located at the interior (114) of the airfoil body (110) and an exterior spar portion (128) exterior of the airfoil body (110);
a sleeve assembly (130, 230, 330) comprising an outer sleeve (132, 232, 332) and an inner sleeve (134, 234, 334) circumscribed by the outer sleeve (132, 232, 332), wherein at least part of the exterior spar portion (128) of the composite spar (120, 220, 320) is received at a radially outer surface (136, 236, 336) of the inner sleeve (134, 234, 334); and
a set of paddles (150, 250, 350) extending from the inner sleeve (134, 234, 334) or the outer sleeve (132, 232, 332) towards the other of the inner sleeve (134, 234, 334) or the outer sleeve (132, 232, 332).

2. The airfoil assembly (100) of claim 1, wherein the airfoil assembly (100) is a variable pitch airfoil assembly (100).

3. The airfoil assembly (100) of claim 1 or 2, wherein the set of paddles (150, 250, 350) are metallic.

4. The airfoil assembly (100) of any of claims 1 to 3, wherein the composite spar (120, 220, 320) comprises at least a first spar portion (192, 292, 392) and a second spar portion (194, 294, 394), wherein the first spar portion (192, 292, 392) and the second spar portion (194, 294, 394) extend in the spanwise direction and a set of abutments (196a, 196b, 296a, 296b, 396a, 396b) are defined between the first spar portion (192, 292, 392) and the second spar portion (194, 294, 394).

5. The airfoil assembly (100) of any of claims 1 to 4, wherein at least part of the exterior spar portion (128) is received at a radially inner surface (133, 233, 333) of the outer sleeve (132, 232, 332).

6. The airfoil assembly (100) of claim 5, wherein the sleeve assembly (130, 230, 330) defines a sleeve centerline (142, 242, 342) and a spar thickness (144, 244) measured perpendicular to the sleeve centerline (142, 242, 342) from the radially outer surface (136, 236, 336) of the inner sleeve (134, 234, 334) to a radially inner surface (133, 233, 333) of the outer sleeve (132, 232, 332).

7. The airfoil assembly (100) of claim 6, wherein at least one paddle in the set of paddles (150, 250, 350) has a paddle extension distance (176, 276) measured from an inner paddle end (172, 272, 372) located at the radially outer surface (136, 236, 336) of the inner sleeve (134, 234, 334) toward the outer sleeve (132, 232, 332) to an outer paddle end (174, 274, 374), and wherein the paddle extension distance (176, 276) is less than the spar thickness (144, 244).

8. The airfoil assembly (100) of claim 6, wherein at least one paddle in the set of paddles (150, 250, 350) has a paddle extension distance (176, 276) measured from an inner paddle end (172, 272, 372) located at the radially outer surface (136, 236, 336) of the inner sleeve (134, 234, 334) toward the outer sleeve (132, 232, 332) to an outer paddle end (174, 274, 374), and wherein the paddle extension distance (176, 276) is equal to the spar thickness (144, 244).

9. The airfoil assembly (100) of any of claims 1 to 8, wherein the composite spar (120, 220, 320) comprises at least a first spar portion (192, 292, 392) and a second spar portion (194, 294, 394), wherein at least one paddle in the set of paddles (150, 250, 350) is located between the first spar portion (192, 292, 392) and the second spar portion (194, 294, 394).

10. The airfoil assembly (100) of any of claims 1 to 9, wherein at least one paddle in the set of paddles (150, 250, 350) extends radially outward from the inner sleeve (134, 234, 334) and is received by a sleeve recess in a radially inner surface (133, 233, 333) of the outer sleeve (132, 232, 332).

11. The airfoil assembly (100) of claim 10, wherein at least one paddle in the set of paddles (150, 250, 350) is located between the first spar portion (192, 292, 392) and the second spar portion (194, 294, 394).

12. The airfoil assembly (100) of claim 11, wherein the at least one paddle is a first paddle (150a, 250a, 350a) and the set of paddles (150, 250, 350) further comprises a second paddle (150b, 250b, 350b) extending radially outward from the inner sleeve (134, 234, 334).

13. The airfoil assembly (100) of claim 12, wherein the second paddle (150b, 250b, 350b) is circumferentially spaced from the first paddle (150a, 250a, 350a) and located between the first spar portion (192, 292, 392) and the second spar portion (194, 294, 394).

14. The airfoil assembly (100) of claim 12 or 13, wherein the second paddle (150b, 250b, 350b) extends from an inner paddle end (172, 272, 372) at the radially outer surface (136, 236, 336) of the inner sleeve (134, 234, 334) to an outer paddle end (174, 274, 374) located between the radially outer surface (136, 236, 336) of the inner sleeve (134, 234, 334) and the radially inner surface (133, 233, 333) of the outer sleeve (132, 232, 332).

15. The airfoil assembly (100) of any of claims 1 to 14, wherein the composite spar (120, 220, 320) comprises at least a first spar portion (192, 292, 392) and a second spar portion (194, 294, 394), wherein the set of paddles (150, 250, 350) includes a first paddle (150a, 250a, 350a) located between the first spar portion (192, 292, 392) and the second spar portion (194, 294, 394), a second paddle (150b, 250b, 350b) located between the first spar portion (192, 292, 392) and the second spar portion (194, 294, 394), and the second paddle (150b, 250b, 350b) is circumferentially spaced from the first paddle (150a, 250a, 350a).
